# EUROPEAN PATENT SPECIFICATION

(11) **EP 3 878 661 B1**
(45) Date of publication and mention of the grant of the patent: **03.08.2022**
(21) Application number: 20305243.6
(22) Date of filing: 09.03.2020
(51) Int. Cl.: B60B 11/08

(54) **VARIABLE RIM STRUCTURE FOR A VEHICLE**
VARIABLE FELGENSTRUKTUR FÜR EIN FAHRZEUG
STRUCTURE DE JANTE VARIABLE POUR VÉHICULE

(43) Date of publication of application: 15.09.2021
(73) Proprietor: Kubota Corporation, Osaka-shi, Osaka 556-8601 (JP)
(72) Inventor: CHAUVEL, Guillaume, 95101 Argenteuil Cedex (FR)
(74) Representative: Cabinet Beau de Loménie

(56) References cited:
- EP-A1- 2 676 807
- EP-A1- 3 409 502
- EP-A2- 0 022 741
- BE-A- 827 446
- GB-A- 1 150 788
- GB-A- 2 244 460
- US-A- 1 808 886

## Description

### TECHNICAL FIELD

The present invention related to the field of wheel rims, notably for work vehicles such as tractors.

### BACKGROUND ART

The design of wheel rims requires a permanent adaptation to the evolving designs of work vehicles such as tractors. Wheel rims for such vehicles tend to have a dual function; defining the position of the wheel, and also adding weight to the wheel.

It is known to design wheel rims that provide simplified structures for the attachment of wheel weights. Documents EP2676807, US1808886 and US2019/0092092 disclose such examples of known wheel rims.

These known wheel rim structures remain complex, and lack of adaptability.

The present invention aims at addressing at least partially these issues.

### PRESENTATION OF THE INVENTION

The present invention is related to a variable rim structure as defined in claim 1, comprising:
- a rim extending around a central axis, the rim defining an inner wall an and an outer wall, the outer wall being adapted to support a tire, the inner wall defining an inner opening of the rim, and presenting an inner flange that extends radially inwards, the inner flange presenting a proximal face and a distal face along the central axis
- a first set of spacers arranged within the inner opening of the rim, superimposed on one of the proximal face and the distal face of the inner flange, said first set of spacers comprising at least one spacer, each spacer of said set of spacers being a ring element having a same section along the central axis, that at least partially overlap with the inner flange of the rim, and that is fixed to the inner flange of the rim,
- a disk, configured to fit within the inner opening of the rim , and fixed on the first set of spacers on one hand, and to a vehicle axle on the other hand, so that said first set of spacers (40) is arranged between the inner flange of the rim and the disk, and
- a second set of spacers comprising at least one spacer, arranged on the other of the proximal face and the distal face of the inner flange, so that the inner flange is arranged between the first set of spacers and the second set of spacers.

According to an example embodiment, each spacer of said set of spacers has a section identical to the section of the inner flange along the central axis, so that each spacer of said set of spacers and the inner flange can be superimposed within the inner opening of the rim.

The present invention also related to a rim assembly of a vehicle, comprising:
- a variable rim structure as defined previously, - a tire arranged around the outer wall of the rim,
- a vehicle axle, that extends within the inner opening of the rim, assembled to the disk.

According to an example embodiment, each spacer has a section identical to the shape of the inner flange along the central axis, so that the spacers and the inner flange are superimposed within the inner opening of the rim.

According to an example embodiment, the spacers each have identical dimensions.

The present invention further related to a work vehicle that comprises such a rim assembly or a variable rim structure. The work vehicle can be a tractor.

The present invention also presents a method for assembling a wheel rim on an axle of a vehicle, the rim extending around a central axis, the rim defining an inner wall an and an outer wall, the outer wall being adapted to support a tire, the inner wall defining an inner opening of the rim, and presenting an inner flange that extends radially inwards, said method comprising the steps of:
- defining the target position of the rim with respect to the axle,
- providing a first set of spacers, which are arranged on a first side of the inner flange of the rim so as to obtain the target position of the rim with respect to the axle,
- assembling an end plate of the axle to the first set of spacers and to the inner flange, such that first set of spacers is arranged between the inner flange and the end plate of the axle.

Said method further comprises the steps of:
- defining a target weight wheel,
- providing a second set of spacers, which are fixed on a second side of the inner flange of the rim, opposite to the first side of the inner flange, said second set of spacers forming the target weight wheel.

### BRIEF PRESENTATION OF THE DRAWINGS

Other features, aims and advantages of the invention will be detailed in the following description, which is purely illustrative and should not be interpreted in a limiting way, and which should be read in view of the enclosed drawings, wherein:
Figure 1 discloses an exploded view of a wheel rim assembly according to the present disclosure.
Figures 2, 3 and 4 disclose different embodiments of the present invention.

In the various drawings, elements in common are designated by identical numeral references.

### DETAILED DESCRIPTION

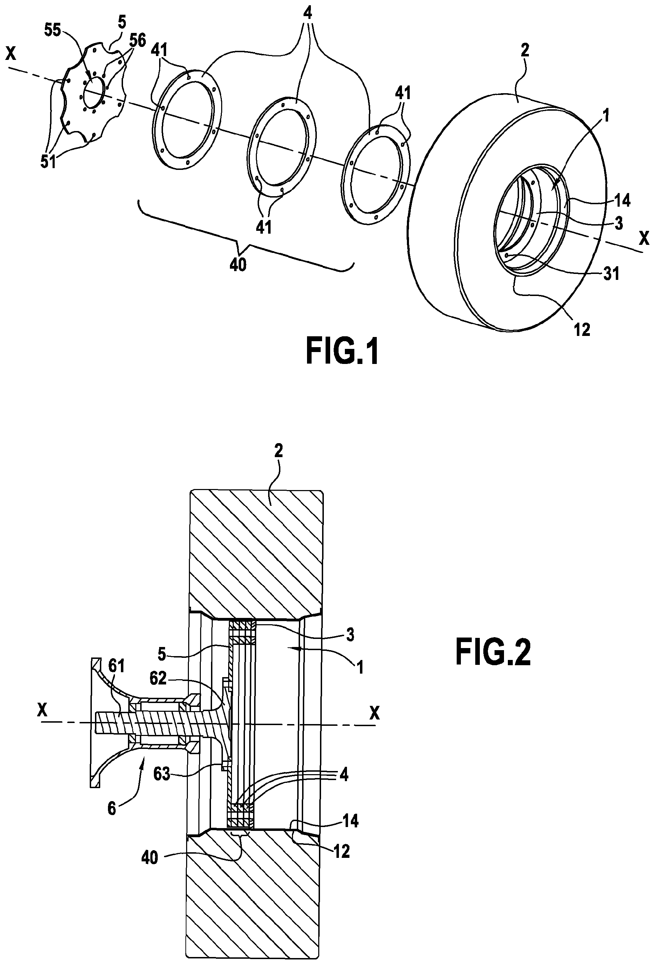

A variable rim structure and a rim assembly according to the present invention are described hereafter in relation to figures 1 to 4.

The figures disclose a vehicle wheel rim 1 which extends along a central axis X-X.

The rim 1 as presented is made out of a tubular body that extends around the central axis X-X, the tubular body having a variable diameter. The rim 1 presents an outer wall 12 and an inner wall 14. The outer wall 12 is adapted to support a tire 2 of a vehicle, such as a work vehicle tire, for instance a tractor tire. The inner wall 14 defines an inner opening of the rim 1.

The rim 1 is provided with an inner flange 3, which extends radially inwards from the inner wall 14 of the rim 1. The inner flange 3 presents an annular shape, and defines a central opening. The inner flange 3 is provided with a number of through holes 31 that allow assembling elements to go through the inner flange 3, such as bolts, screws or rods.

The inner flange 3 typically has the shape of a ring, with a thickness that is in the range of a tenth to a quarter of the radius of the inner opening of the rim 1.

A disk 5 is provided. The disk 5 is adapted to fit within the inner opening of the rim, and to at least partially overlap the inner flange 3 in a plane perpendicular to the central axis X-X. The disk presents an opening defining a central passage 55, adapted to enable an axle 6 of a vehicle to pass through the disk 5 as it will be detailed hereafter.

The disk 5 is adapted to be assembled to the inner flange 3 on one end, and also to an axle 6 of a vehicle. The disk 5 presents a plurality of outer through holes 51, which are adapted to be aligned with the through holes 31 of the inner flange 3, so that assembling elements can be arranged in the outer through holes 51 of the disk 5 and the through holes 31 of the inner flange 3.

The disk 5 also presents a plurality of inner through holes 56, arranged around the central passage 55 of the disk 5. These inner through holes 56 are adapted to enable the disk 5 to be fixed to an axle of a vehicle.

A vehicle axle 6 is illustrated in figures 2, 3 and 4. The detailed structure of the axle will not be detailed here, as the present invention is related to a wheel rim structure.

The vehicle axle 6 presents a longitudinal body 61 that extends along the central axis X-X, and an end plate 62 which extends radially around the central axis X-X at a free end of the axle 6, and which presents through holes 63 arranged along an identical configuration as the inner through holes 56 of the disk 5, so that assembling elements such as bolts, screws or rods can be arranged through the through holes 63 and the inner through holes 56 to assemble the disk 5 to the axle 6.

A plurality of spacer elements is provided. The spacer elements can be divided in two sets of spacer elements that we describe hereafter.

A first set of spacers 40 is provided between the inner flange 3 and the disk 5.

A second set of spacers 70 is provided on the other side of the inner flange 3 with respect to the first set of spacers 40, so that the inner flange 3 is arranged between the first set of spacers 40 and the second set of spacers 70.

The second set of spacers 70 is optional. The rim assembly as disclosed can comprise the first set of spacers 40 as a sole set of spacers.

The first set of spacers 40 comprises at least one spacer 4. The first set of spacers 40 can for instance include a plurality of identical spacers 4.

When the second set of spacers 70 is provided, it comprises at least one spacer 7. The second set of spacers 70 can for instance include a plurality of identical spacers 7. The spacers 7 of the second set of spacers 70 can be identical to the spacers 4 of the first set of spacers 40, or can be a same section but a different thickness, the thickness being the dimension along the central axis X-X.

The spacers 4 as illustrated are metal rings, for instance with a shape that is identical to the shape of the inner flange 3, or a shape that at least partially overlaps with the inner flange 3 in a view along the central axis X-X.

The spacers 4 each have through holes 41, which align with the through holes 31 of the inner flange 3, and with the outer through holes 51 of the disk 5.

The spacers 4 of the first set of spacers 40 are arranged between the inner flange 3 and the disk 5. The first set of spacers 40 enables to adjust the position of the wheel rim with respect to the axle 6.

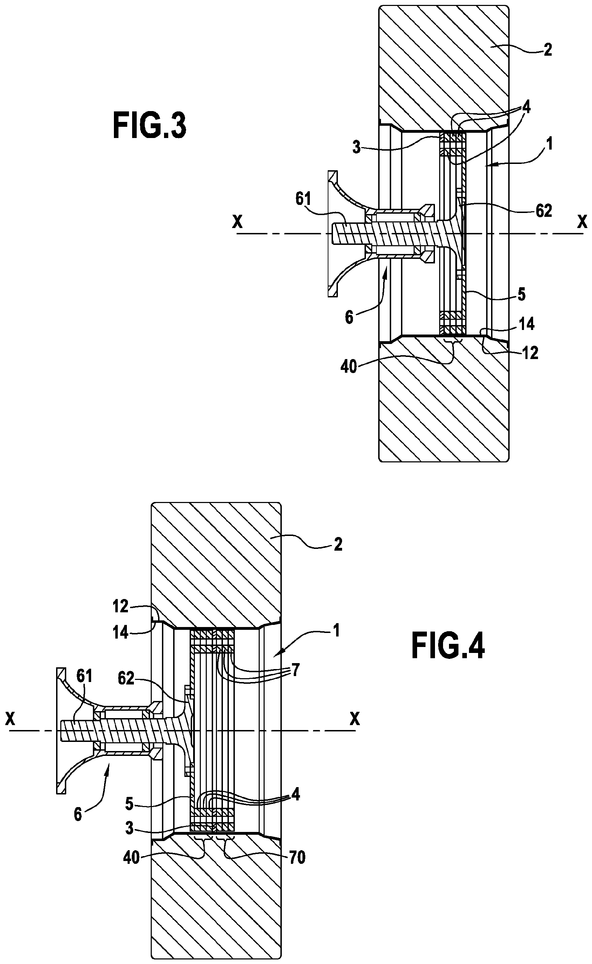

Figures 2 and 3 illustrate two examples of arrangements that use the first set of spacers 40 to modify the position of the rim 1 with respect to the axle 6.

For the sake of the description, we will consider that along the central axis X-X, the end adjacent to the axle 6 is defined as the proximal end, while the opposite end is the distal end.

In the example disclosed in figure 2, we aim at spacing the wheel 2 from the axle 6. The first set of spacers 40, which comprises three spacers 4, is arranged on a proximal face of the inner flange 3. The disk 5 is the arranged on a proximal end of the first set of spacers 40, and the axle 6 is assembled to a proximal face of the disk 5. This arrangement enables to offset the wheel away from the axle 6. The offset can be adjusted by adding or removing spacers 4 from the first set of spacers 40.

In the example disclosed in figure 3, we aim at decreasing the distance between the vehicle and the wheel, which consists in bringing the tire 2 closer to the proximal end of the central axis X-X. The first set of spacers 40 is therefore arranged on a distal face of the inner flange 3. The disk 5 is the arranged on a distal end of the first set of spacers 40, and the axle 6 is assembled to a proximal face of the disk 5, while passing through the inner flange 3 and the spacers 4 of the first set of spacers 40. This arrangement enables to modify the offset of the wheel, and to bring it closer to the proximal side of the central axis X-X, i.e. closer to a frame of the vehicle. The offset can be modified by adding or removing spacers 4 from the first set of spacers 40.

The variable rim structure according to the present invention therefore enables to adjust the position of the wheel by using a set of preestablished components, without requiring the development and the production of a specific rim structure for each vehicle. The present invention enables to develop a limited set of components where the sole limitation is the internal diameter of the rim, and to adapt these components to achieve multiple wheel configurations.

Figure 4 represents another effect of the present invention. Figure 4 is a variation of figure 4, in which a second set of spacers 70 has been arranged on a distal side of the inner flange 3. This second set of spacers 70 has no impact on the position of the wheel with respect to the axle 6 of the vehicle, but enables to modify the weight of the wheel, and thereby enable to form a wheel weight assembly.

The added weight can be adapted by adding or removing spacers 7 from the second set of spacers 70.

The spacers from the first and second sets of spacers 40 and 70 can be made from the same material or from distinct materials. Spacers having different thicknesses can be provided, in order to allow a precise setting of the offset of the wheel and of the weight wheel.

The present invention therefore enables to perform a dual function, which are modifying the position of the wheel and also forming a weight wheel arrangement, by using only standard components, thereby avoiding the need to develop specific components for each vehicle wheel.

Such a variable rim structure is also easy to assemble, which facilitates the maintenance operations.

Additionally, such a variable rim structure can be adapted to existing vehicles, as it does not require a specific structure on the vehicle axle.

A method for assembling a wheel rim on an axle of a vehicle using the wheel rim structure detailed previously is detailed hereafter.

Firstly, the position of the wheel with respect to the axle is determined. An offset between the axle 6 and the rim 1, is then determined, more specifically between the axle 6 and the inner flange 3 of the rim 1.

The first set of spacers 40 is then defined, comprising an appropriate number of spacers 4 to obtain the offset determined previously when said first set of spacers 40 is assembled on the inner flange 3, for instance according to the example configurations disclosed in figures 2 or 3.

Then, in an optional step, a target weight wheel is determined. This step defined a potential additional weight that is to be added to the wheel. Once the target weight has been determined, the second set of spacers 70 is provided, said second set of spacers 70 comprising a number of spacers 7 whose total weight is equal to said determined target weight, typically with a given margin.

The second set of spacers is then assembled to the inner flange 3 of the rim 1.

It is to be understood that all the embodiments detailed in the present invention are example embodiments that aim at providing a better understanding of the scope of the present invention. The scope of the present invention is defined by the claims that are listed hereafter.

It is also to be understood that all the features that have been described in relation to a device can be applied to an associated method, and reciprocally, that all the features described in relation to a method can be applied to an associated device.

The second set of spacers is then assembled to the inner flange 3 of the rim 1.

It is to be understood that all the embodiments detailed in the present invention are example embodiments that aim at providing a better understanding of the scope of the present invention. The scope of the present invention is defined by the claims that are listed hereafter.

## Claims

1. A variable rim structure, comprising
- a rim (1) extending around a central axis (X-X), the rim (1) defining an inner wall (14) an and an outer wall (12), the outer wall (12) being adapted to support a tire (2), the inner wall (14) defining an inner opening of the rim (1), and presenting an inner flange (3) that extends radially inwards, the inner flange (3) presenting a proximal face and a distal face along the central axis (X-X),
- a first set of spacers (40) arranged within the inner opening of the rim (1), superimposed on one of the proximal face and the distal face of the inner flange (3), said first set of spacers (40) comprising at least one spacer (4), each spacer (4) of said set of spacers (40) being a ring element having a same section along the central axis (X-X) that at least partially overlap with the inner flange (3) of the rim (1), and that is fixed to the inner flange (3) of the rim (1) ,
- a disk (5), configured to fit within the inner opening of the rim (1), and fixed on the first set of spacers (40) on one hand, and to a vehicle axle (6) on the other hand, so that said first set of spacers (40) is arranged between the inner flange (3) of the rim and the disk (5), and
- a second set of spacers (70) comprising at least one spacer (7), arranged on the other of the proximal face and the distal face of the inner flange (3), so that the inner flange (3) is arranged between the first set of spacers (40) and the second set of spacers (70).

2. The variable rim structure of claim 1, wherein each spacer (4) of said set of spacers (40) has a section identical to the section of the inner flange (3) along the central axis (X-X), so that each spacer (4) of said set of spacers (40) and the inner flange (3) can be superimposed within the inner opening of the rim (1).

3. A rim assembly of a vehicle, comprising:
- a variable rim structure as defined in any one of claims 1 or 2,
- a tire (2) arranged around the outer wall (12) of the rim (1),
- a vehicle axle (6), that extends within the inner opening of the rim (1), assembled to the disk (5).

4. A rim assembly according to claim 3; wherein each spacer (4, 7) has a section identical to the shape of the inner flange (3) along the central axis (X-X), so that the spacers (4, 7) and the inner flange (3) are superimposed within the inner opening of the rim (1).

5. A rim assembly according to any one of claims 3 or 4, wherein the spacers (4, 7) each have identical dimensions.

6. A work vehicle comprising a rim assembly according to any one of claims 3 to 5.

7. A method for assembling a wheel rim (1) on an axle (6) of a vehicle, the rim (1) extending around a central axis (X-X), the rim (1) defining an inner wall (14) an and an outer wall (12), the outer wall (12) being adapted to support a tire (2), the inner wall (14) defining an inner opening of the rim (1), and presenting an inner flange (3) that extends radially inwards,
said method comprising the steps of:
- defining the target position of the rim (1) with respect to the axle (6),
- providing a first set of spacers (40), which are arranged on a first side of the inner flange (3) of the rim (1) so as to obtain the target position of the rim (1) with respect to the axle (6),
- assembling an end plate (62) of the axle (6) to the first set of spacers (40) and to the inner flange (3), such that first set of spacers (40) is arranged between the inner flange (3) and the end plate (62) of the axle (6)
- defining a target weight wheel,
- providing a second set of spacers (70), which are fixed on a second side of the inner flange (3) of the rim (1), opposite to the first side of the inner flange (3), said second set of spacers (70) forming the target weight wheel.

## Patentansprüche

1. Variable Felgenstruktur, umfassend:
- eine Felge (1), die sich um eine Mittelachse (X-X) herum erstreckt, wobei die Felge (1) eine Innenwand (14) und eine Außenwand (12) definiert, wobei die Außenwand (12) dazu angepasst ist, einen Reifen (2) zu tragen, wobei die Innenwand (14) eine Innenöffnung der Felge (1) definiert, und einen Innenflansch (3) aufweist, der sich radial einwärts erstreckt, wobei der Innenflansch (3) eine proximale Seite und eine distale Seite entlang der Mittelachse (X-X) aufweist,
- einen ersten Satz von Abstandshaltern (40), die innerhalb der Innenöffnung der Felge (1), übereinanderliegend an einer von der proximalen Seite und der distalen Seite des Innenflansches (3) angeordnet sind, wobei der erste Satz von Abstandshaltern (40) mindestens einen Abstandshalter (4) umfasst, wobei jeder Abstandshalter (4) des Satzes von Abstandshaltern (40) ein Ringelement mit demselben Querschnitt entlang der Mittelachse (X-X) ist, das zumindest teilweise mit dem Innenflansch (3) der Felge (1) überlappt und das an dem Innenflansch (3) der Felge (1) befestigt ist,
- eine Scheibe (5), die dazu ausgestaltet ist, in die Innenöffnung der Felge (1) zu passen, und die einerseits an dem ersten Satz von Abstandshaltern (40) und anderseits an einer Fahrzeugachse (6) befestigt ist, so dass der erste Satz von Abstandshaltern (40) zwischen dem Innenflansch (3) der Felge und der Scheibe (5) angeordnet ist, und
- einen zweiten Satz von Abstandshaltern (70), der mindestens einen Abstandshalter (7) umfasst, der an der anderen von der proximalen Seite und der distalen Seite des Innenflansches (3) angeordnet ist, so dass der Innenflansch (3) zwischen dem ersten Satz von Abstandshaltern (40) und dem zweiten Satz von Abstandshaltern (70) angeordnet ist.

2. Variable Felgenstruktur nach Anspruch 1, wobei jeder Abstandshalter (4) des Satzes von Abstandshaltern (40) einen Querschnitt aufweist, der mit dem Querschnitt des Innenflansches (3) entlang der Mittelachse (X-X) identisch ist, so dass jeder Abstandshalter (4) des Satzes von Abstandshaltern (40) und der Innenflansch (3) innerhalb der Innenöffnung der Felge (1) übereinanderliegend sein können.

3. Felgenanordnung eines Fahrzeugs, umfassend:
- eine variable Felgenstruktur wie in einem der Ansprüche1 oder 2 definiert,
- einen Reifen (2), der um die Außenwand (12) der Felge (1) herum angeordnet ist,
- eine Fahrzeugachse (6), die sich innerhalb der Innenöffnung der Felge (1) erstreckt und an der Scheibe (5) montiert ist.

4. Felgenanordnung nach Anspruch 3, wobei jeder Abstandshalter (4, 7) einen Querschnitt aufweist, der mit der Form des Innenflansches (3) entlang der Mittelachse (X-X) identisch ist, so dass die Abstandshalter (4, 7) und der Innenflansch (3) innerhalb der Innenöffnung der Felge (1) übereinanderliegend sind.

5. Felgenanordnung nach einem der Ansprüche 3 oder 4, wobei die Abstandshalter (4, 7) jeweils identische Abmessungen aufweisen.

6. Arbeitsfahrzeug, umfassend eine Felgenanordnung nach einem der Ansprüche 3 bis 5.

7. Verfahren zum Montieren einer Radfelge (1) an einer Achse (6) eines Fahrzeugs, wobei sich die Felge (1) um eine Mittelachse (X-X) herum erstreckt, wobei die Felge (1) eine Innenwand (14) und eine Außenwand (12) definiert, wobei die Außenwand (12) dazu angepasst ist, einen Reifen (2) zu tragen, wobei die Innenwand (14) eine Innenöffnung der Felge (1) definiert, und einen Innenflansch (3) aufweist, der sich radial einwärts erstreckt,
wobei das Verfahren die Schritte umfasst:
- Definieren der Zielposition der Felge (1) in Bezug auf die Achse (6),
- Bereitstellen eines ersten Satzes von Abstandshaltern (40), die an einer ersten Seite des Innenflansches (3) der Felge (1) angeordnet sind, um die Zielposition der Felge (1) in Bezug auf die Achse (6) zu erreichen,
- Montieren einer Endplatte (62) der Achse (6) an dem ersten Satz von Abstandshaltern (40) und an dem Innenflansch (3), so dass der erste Satz von Abstandshaltern (40) zwischen dem Innenflansch (3) und der Endplatte (62) der Achse (6) angeordnet ist,
- Definieren eines Sollgewichtsrads,
- Bereitstellen eines zweiten Satzes von Abstandshaltern (70), die an einer zweiten Seite des Innenflansches (3) der Felge (1), gegenüberliegend zu der ersten Seite des Innenflansches (3) befestigt sind, wobei der zweite Satz von Abstandshaltern (70) das Sollgewichtsrad bilden.

## Revendications

1. Structure de jante variable, comprenant
- une jante (1) s'étendant autour d'un axe central (X-X), la jante (1) définissant une paroi intérieure (14) et une paroi extérieure (12), la paroi extérieure (12) étant adaptée pour supporter un pneu (2), la paroi intérieure (14) définissant une ouverture intérieure de la jante (1), et présentant un rebord intérieur (3) qui s'étend radialement vers l'intérieur, le rebord intérieur (3) présentant une face proximale et une face distale le long de l'axe central (X-X),
- un premier jeu d'entretoises (40) agencé à l'intérieur de l'ouverture intérieure de la jante (1), superposé à l'une parmi la face proximale et la face distale du rebord intérieur (3), ledit premier jeu d'entretoises (40) comprenant au moins une entretoise (4), chaque entretoise (4) dudit jeu d'entretoises (40) étant un élément annulaire ayant une même section le long de l'axe central (X-X) qui chevauche au moins partiellement le rebord intérieur (3) de la jante (1), et qui est fixé au rebord intérieur (3) de la jante (1),
- un disque (5), configuré pour s'ajuster dans l'ouverture intérieure de la jante (1), et fixé sur le premier jeu d'entretoises (40) d'une part, et à un essieu (6) de véhicule d'autre part, de sorte que ledit premier jeu d'entretoises (40) soit agencé entre le rebord intérieur (3) de la jante et le disque (5), et
- un deuxième jeu d'entretoises (70) comprenant au moins une entretoise (7), agencée sur l'autre parmi la face proximale et la face distale du rebord intérieur (3), de sorte que le rebord intérieur (3) soit agencé entre le premier jeu d'entretoises (40) et le deuxième jeu d'entretoises (70).

2. Structure de jante variable selon la revendication 1, dans laquelle chaque entretoise (4) dudit jeu d'entretoises (40) a une section identique à la section du rebord intérieur (3) le long de l'axe central (X-X), de sorte que chaque entretoise (4) dudit jeu d'entretoises (40) et le rebord intérieur (3) puissent être superposés à l'intérieur de l'ouverture intérieure de la jante (1).

3. Ensemble jante d'un véhicule, comprenant :
- une structure de jante variable telle que définie dans l'une quelconque des revendications 1 ou 2,
- un pneu (2) agencé autour de la paroi extérieure (12) de la jante (1),
- un essieu (6) de véhicule, qui s'étend à l'intérieur de l'ouverture intérieure de la jante (1), assemblé au disque (5).

4. Ensemble jante selon la revendication 3, dans lequel chaque entretoise (4, 7) a une section identique à la forme du rebord intérieur (3) le long de l'axe central (X-X), de sorte que les entretoises (4, 7) et le rebord intérieur (3) soient superposés à l'intérieur de l'ouverture intérieure de la jante (1).

5. Ensemble jante selon l'une quelconque des revendications 3 ou 4, dans lequel les entretoises (4, 7) ont chacune des dimensions identiques.

6. Véhicule utilitaire comprenant un ensemble jante selon l'une quelconque des revendications 3 à 5.

7. Procédé d'assemblage d'une jante (1) de roue sur un essieu (6) d'un véhicule, la jante (1) s'étendant autour d'un axe central (X-X), la jante (1) définissant une paroi intérieure (14) et une paroi extérieure (12), la paroi extérieure (12) étant adaptée pour supporter un pneu (2), la paroi intérieure (14) définissant une ouverture intérieure de la jante (1), et présentant un rebord intérieur (3) qui s'étend radialement vers l'intérieur,
ledit procédé comprenant les étapes consistant à :
- définir la position cible de la jante (1) par rapport à l'essieu (6),
- fournir un premier jeu d'entretoises (40) qui sont agencées sur un premier côté du rebord intérieur (3) de la jante (1) de manière à obtenir la position cible de la jante (1) par rapport à l'essieu (6),
- assembler une plaque d'extrémité (62) de l'essieu (6) au premier jeu d'entretoises (40) et au rebord intérieur (3), de sorte que le premier jeu d'entretoises (40) soit agencé entre le rebord intérieur (3) et la plaque d'extrémité (62) de l'essieu (6)
- définir une roue de poids cible,
- fournir un deuxième jeu d'entretoises (70) qui sont fixées sur un deuxième côté du rebord intérieur (3) de la jante (1) opposé au premier côté du rebord intérieur (3), ledit deuxième jeu d'entretoises (70) formant la roue de poids cible.
